# EUROPEAN PATENT APPLICATION

(11) **EP 4 721 840 A1**
(43) Date of publication of application: **08.04.2026**
(21) Application number: 24204217.4
(22) Date of filing: 02.10.2024
(51) Int. Cl.: B01D 53/06, B01D 53/14, B01D 53/26, B01D 53/04, B01D 53/047

(54) **METHOD FOR CONTINUOUSLY EXTRACTING A SUBSTANCE FROM A FLUID**

(71) Applicant: Hif Emea GmbH, 10758 Berlin (DE)
(72) Inventor: SCHUHMACHER, Rolf, 14059 Berlin (DE); TREMEL, Alexander, 91096 Möhrendorf (DE); MARQUES, Marcos, 65779 Kelkheim (DE)
(74) Representative: WBH Wachenhausen Patentanwälte PartG mbB

(57) **Abstract**

The present disclosure relates to a method for continuously extracting a substance, preferably carbon dioxide or water, from a fluid, preferably air. The method comprises the steps of contacting (II) a first fluid amount (204.1) in a contacting area (20) with a first sorbent portion (202.1), enabling the first sorbent portion (202.1) to sorb a first substance (206.1) from the first fluid amount (204.1). The method further comprises the step of separating (III) the first sorbent portion (202.1) from the contacting area (20) and the step of desorbing (IV) the first substance (206.1) from the first sorbent portion (202.1) separated from the contacting area (20). The method further comprises the step of contacting (II) a second fluid amount (204.2) with a second sorbent portion (202.2) in the contacting area (20). The step is performed during the step of desorbing (IV) the first substance (206.1) from the first sorbent portion (202.1), enabling the second sorbent portion (202.2) to sorb a second substance (206.2) from the second fluid amount (204.2). The present disclosure further relates to an apparatus (10) for continuously extracting a substance, preferably carbon dioxide or water, from a fluid, preferably air. The apparatus (10) is optionally configured to carry out said method.

## Description

### Technical field

The present disclosure relates to a method for continuously extracting a substance, preferably carbon dioxide or water, from a fluid, preferably air. The present disclosure further relates to an apparatus for continuously extracting a substance, preferably carbon dioxide, from a fluid, preferably air.

### Prior art

Methods and apparatuses are known in the art to extract various substances from the air. For example, it is known to use zeolite to adsorb carbon dioxide from the air. Many of these methods of the prior art rely on batch processes.

### Summary of the invention

In a first aspect, the present disclosure relates to a method for continuously extracting a substance, preferably carbon dioxide or water, from a fluid, preferably air. Extracting a substance from the fluid may comprise removing said substance from the fluid. Extracting a substance from the fluid may comprise removing said substance from the fluid by means of adsorption and/or absorption. The substance may comprise a substance that is soluble in the fluid. The substance may comprise carbon dioxide, water, nitrogen, oxygen, and/or other substances. The fluid may comprise a liquid and/or a gas. The fluid may comprise air, in particular ambient air, water, and/or other fluids. The air may be filtered air.

The method comprises the step of contacting a first fluid amount with a first sorbent portion in a contacting area, enabling the first sorbent portion to sorb a first substance from the first fluid amount. The method further comprises the steps of separating the first sorbent portion from the contacting area and of desorbing the first substance from the first sorbent portion separated from the contacting area. The method further comprises the step of contacting a second fluid amount with a second sorbent portion in the contacting area while desorbing the first substance from the first sorbent portion, enabling the second sorbent portion to sorb a second substance from the second fluid amount. The method may be executed continuously. To be executed continuously may mean that the steps are each executed without interruption. To be executed continuously may mean that the steps may be executed in parallel. The steps may be executed in parallel on a stream of sorbent, with each step being executed at the same time at different positions along the stream of sorbent. The first sorbent portion and the second sorbent portion may constitute portions of the stream of sorbent. The first fluid amount and the second fluid amount may constitute portions of a stream of fluid. Steps applied to the first fluid amount and/or first sorbent portion may be applied to the second fluid amount and/or second sorbent portion analogously and vice versa. Devices and arrangements acting on the first fluid amount and/or sorbent portion may act analogously on the second fluid amount and/or sorbent portion analogously and vice versa.

The sorbent may be a component that is able to sorb another substance, in particular by adsorption and/or absorption. Preferably the sorbent is an adsorbing substance, meaning that it is a substance able to adsorb, i.e., collect another substance at its surface. Preferably, the sorbent is configured to adsorb carbon dioxide and/or water. The sorbent may be provided as a bulk solid, for example comprising loose particles, and/or as a liquid, and/or comprise at least one of silica gel, silicon dioxide, zeolite and activated carbon. The particles may have a geometry with a high surface to volume ratio, for example having a high porosity. The sorbent may have a sorption capacity that is inversely proportional to temperature within the operating temperature range of the method. The sorbent may have a sorption capacity that is proportional to pressure and/or partial pressure of the substance within the operating pressure range of the method.

Contacting the first fluid amount with the first sorbent portion may comprise transporting the fluid and the sorbent into the same space, for example the contacting area. The contacting area may be provided by a contacting chamber. The contacting area may be an area in which the fluid and the sorbent come into contact. The contacting area may be moveable, for example if the points in which the fluid and the sorbent contact each other move. Contacting the first fluid amount with the first sorbent portion may comprise flowing the first fluid amount over the first sorbent portion. The fluid and/or the sorbent may be provided as streams of material, and contacting the first fluid amount with the first sorbent portion may comprise crossing these streams. Contacting the first fluid amount with the first sorbent portion may comprise contacting them such that the first sorbent portion is substantially saturated with the first substance. Contacting the first fluid amount with the first sorbent portion, enabling the first sorbent portion to sorb the first substance from the first fluid amount, may comprise providing conditions to enable the sorption to take place. For example, it may comprise providing a temperature of the fluid, the sorbent, and/or the contacting area of less than 10°C, preferably less than 0°C, more preferably of -1°C or less.

Separating the first sorbent portion from the contacting area may comprise transporting the first sorbent portion to a different space. It may also comprise separating the first sorbent portion from the first fluid amount. Separating the first sorbent portion may comprise filtering or otherwise mechanically separating it from the contacting area. If the fluid and/or the sorbent are provided as streams, separating may comprise letting the fluid and the sorbent flow along separate paths. For example, a stream of fluid and a stream of sorbent may cross in a contacting area of a contacting chamber and leave the contacting chamber along different paths. Separating may comprise separating the first sorbent portion when it is substantially saturated with the first substance. For example, it may comprise separating when the first sorbent portion is fully saturated with water and/or carbon dioxide. Desorbing the first substance from the first sorbent portion may comprise treating the first sorbent portion to cause it to desorb the first substance. Desorbing the first substance from the first sorbent portion may comprise increasing a temperature and/or reducing a pressure of the sorbent. Desorbing the first substance from the first sorbent portion may comprise diverting the desorbed substance away, for example into a collection system. The desorbed substance may be purified, filtered, compressed, stored, transported, and/or processed in a further manner.

The second fluid amount may be a part of the same stream of fluid as the first fluid amount. The second fluid amount may be arranged upstream of the first fluid amount. The first and the second fluid amounts may be separate fluid amounts. The second sorbent portion may be a part of the same stream of sorbent as the first sorbent portion. The second sorbent portion may be arranged upstream of the first sorbent portion. The first and the second sorbent portions may be separate sorbent portions, e.g. portions of two different sorbents, which are provided separately from each other. Additionally or alternatively, they may be different portions of a single sorbent. Contacting the second fluid amount with the second sorbent portion in the contacting area may be performed at the same time as separating the first sorbent portion from the contacting area. For example, the second sorbent portion may be brought into the contacting area as the first sorbent portion is leaving the contacting area. The second sorbent portion may sorb the second substance from the second fluid amount in substantially the same way as the first sorbent portion sorbs the first substance. The first substance and the second substance may be the same substance. The first substance and the second substance may comprise different substances.

By providing a continuous process as described above, a particularly efficient method for extracting a substance from a fluid is provided. By using a continuous process, an extraction time may be reduced, a throughput increased and/or an efficiency improved.

In an embodiment, desorbing the first substance from the first sorbent portion comprises at least one of heating the first sorbent portion, applying a vacuum to the first sorbent portion, and flowing a purge fluid over the first sorbent portion. Heating the first sorbent portion may comprise heating the first sorbent portion using a heat exchanger and/or a heater, preferably an electric heater. Heating the first sorbent portion may comprise heating it up to a temperature of at least 80°C, preferably up to a temperature of at least 150°C, even more preferably up to 300°C. Applying a vacuum to the first sorbent portion may comprise reducing an ambient pressure of the first sorbent portion, for example using a vacuum chamber. Applying a vacuum may comprise lowering a pressure to less than 0.5 bar, preferably less than 0.1 bar, even more preferably less than 0.01 bar. Flowing a purge fluid over the first sorbent portion may comprise flowing a purge fluid through it or otherwise contacting it with the purge fluid. The purge fluid may be a fluid that is configured to aid a desorption of the substance from the sorbent. The purge fluid may comprise air with a particularly little content of the substance, for example carbon dioxide and/or water. The purge fluid may comprise a higher content of the substance after flowing over the sorbent. The purge fluid may be led away from the first sorbent portion. Flowing the purge fluid over the first sorbent portion may comprise flowing it over the first sorbent portion in the vacuum chamber. This may comprise flowing the purge fluid at a particularly low pressure, for example the pressure achieved by applying the vacuum. By flowing the purge fluid over the sorbent, a content of the substance sorbed by the sorbent may be reduced, preferably reduced by at least 90% relative to the content when exiting the contacting chamber, more preferably by at least 95% and even more preferably by 99%. By providing such methods for desorbing the substance from the sorbent, an efficiency of the described method may be further improved, as the used sorbent can be enabled to quickly sorb further substance from the fluid.

In an embodiment, the method further comprises a step of returning the first sorbent portion separated from the contacting area to the contacting area. For example, the first sorbent portion may be a part of the sorbent stream which may be transported in a closed loop which intersects with the fluid. The fluid may be provided as a stream which does not form a closed loop. For example, the fluid may comprise air from the environment which is brought in contact with the sorbent and then released to the environment again. The air may comprise substantially less carbon dioxide and/or water after being released to the environment again. By providing a continuous process in which the sorbent is contacted with the fluid in a looped manner, an efficiency of the process may be further improved by reducing material requirements.

In an embodiment, the method further comprises a step of preparing the first sorbent portion to increase its sorption capacity. Increasing its sorption capacity may comprise enabling the first sorbent portion to sorb more substance, for example to sorb the first substance again. It may comprise increasing the sorption capacity such that it has substantially the same sorption capacity as before contacting the first fluid amount. Preparing the first sorbent portion may comprise cooling it down such that it is able to sorb the first substance from the fluid again. For example, it may comprise cooling down the first sorbent portion down to less than 80°C, preferably less than 10°C, even more preferably less than 0°C, for example substantially equal to -1°C. By providing for a preparation of the first sorbent portion to increase its sorption capacity, the method described is further improved, as the first sorbent portion can be used for sorbing more substance again more rapidly, which may improve throughput, efficiency, and/or operating costs.

In an embodiment, preparing the first sorbent portion comprises removing heat from the first sorbent portion and transferring said heat to the second sorbent portion to desorb the second substance from the second sorbent portion. This may comprise exchanging heat, for example via a heat exchanger. Removing heat may cool the first sorbent portion down and transferring the heat to the second sorbent portion may warm it up. A heater, preferably an electric heater, may be used to additionally heat the second sorbent portion from which the second substance is being desorbed, preferably such that the second substance is substantially fully desorbed. By providing a heat exchange as described above, a preparation and/or desorption of the first and/or second substance from the sorbent portions may be rendered even more efficient, as energy requirements may be reduced.

In an embodiment, the method further comprises a step of cooling the second fluid amount before contacting it with the second sorbent portion. Cooling the second fluid amount optionally comprises exchanging heat between the second fluid amount and the first fluid amount after contacting it with the first sorbent portion. Exchanging heat may comprise exchanging heat between an incoming airstream and an outgoing airstream. Cooling the second fluid amount may comprise cooling it down to a temperature of at least 1°C, preferably of at least 0°C, more preferably of at least -1 °C. Cooling the second fluid amount may comprise cooling it in two steps, for example cooling it down to a temperature of substantially 1°C in a first step, and then cooling it down further to a temperature of substantially -1 °C in a second step. The first and/or the second step may comprise an exchanging of heat between the second fluid amount before contacting it with the second sorbent portion and the first fluid amount after contacting it with the first sorbent portion. The exchanging of heat may be performed using a rotary heat exchanger and may optionally comprise transferring a water content. By cooling the fluid before contacting it with the sorbent, a sorption of the first and/or second substance by the sorbent portions may be improved, made more efficient and/or accelerated, as sorption capacity may be inversely proportional to temperature. By exchanging heat as described, the method may be rendered even more efficient and potentially less disturbing for an external environment, as the fluid may be returned at a temperature comparable to that of the environment.

In an embodiment, the method further comprises a step of cleaning the first sorbent portion, in particular by removing a dust from the first sorbent portion. As the sorbent is used according to the method described, it may undergo some degree of degradation. If the sorbent is provided as a solid, it may undergo cracking due to heat stress and/or other influences, producing dust. An effectiveness and/or efficiency of the sorbent may thus be reduced. By cleaning the first sorbent portion, an effectiveness may be improved. Removing dust from the first sorbent portion may be done by aspirating away the dust. Additionally or alternatively, removing dust may comprise using a sieve, a centrifuge, and/or other separating means. The sorbent removed in this way may be replaced, for example continuously replaced or replaced when needed. By cleaning the first sorbent portion, a long-term effectiveness of the method described may be continuously ensured, further improving efficiency, cost effectiveness and/or reliability.

In a second aspect, the present disclosure relates to an apparatus for continuously extracting a substance, preferably carbon dioxide or water, from a fluid, preferably air. The apparatus is optionally configured to carry out a method according to the first aspect. The respective advantages and further features can be taken from the description of the first aspect, wherein embodiments of the first aspect also form embodiments of the second aspect and vice versa. The apparatus comprises a contacting chamber for accommodating the fluid. The apparatus further comprises a sorbent transport system for transporting a first sorbent portion through the contacting chamber such that a first fluid amount is contacted with the first sorbent portion, enabling the first sorbent portion to sorb a first substance from the first fluid amount. The apparatus further comprises a desorption device configured to desorb the first substance from the first sorbent portion. The sorbent transport system is configured to transport a second sorbent portion through the contacting chamber while the first substance is being desorbed from the first sorbent portion by the desorption device such that a second fluid amount is contacted with the second sorbent portion, enabling the second sorbent portion to sorb a second substance from the second fluid amount. The contacting chamber may be a space configured to contact the sorbent and the fluid, e.g. in a contacting area as described above. The contacting chamber may comprise a grid, a sieve and/or comparable arrangements allowing the fluid and the sorbent to come into contact with each other while enabling a subsequent separation of the two. The contacting chamber may comprise an inlet and an outlet for the fluid and an inlet and an outlet for the sorbent, with the inlets and the outlets being separate. The contacting chamber may be connected to the sorbent transport system, and may form a section or a part of it. The sorbent transport system may comprise a conveyor belt, bucket elevator and/or screw elevator to transport the sorbent. The sorbent transport system may be configured to continuously transport sorbent into the contacting chamber and transport a substantially equal amount of sorbent out of the contacting chamber. For example, it may be configured to transport a first sorbent portion out of the contacting chamber as it transports a second sorbent portion into it. The sorbent transport system thereby continuously brings the fluid into contact with the sorbent and separates these again. The desorption device may be configured to desorb the substance from the sorbent by heating the sorbent up, for example via a heating chamber. The desorption device may comprise an electric heater to heat the sorbent up. The desorption device may comprise means for removing the desorbed substance, for example a pump, fluid outlet and/or other means.

The apparatus described above may be a particularly efficient apparatus for extracting a substance from a fluid. By using a continuous process, an extraction time may be reduced, a throughput increased and/or an efficiency improved.

In an embodiment, the sorbent transport system is configured to return the first sorbent portion to the contacting chamber after being transported through the contacting chamber. The sorbent transport system may be configured to continuously transport the first sorbent portion in a loop. The sorbent transport system may be configured to continuously return a sorbent stream to the contacting chamber. The sorbent transport system may be configured to return the first sorbent portion to the contacting chamber after the first substance is desorbed from it. By providing a sorbent transport system configured to return sorbent to the contacting chamber as described, a more efficient material utilization may be enabled as a need for refilling sorbent may be reduced.

In an embodiment, the apparatus comprises a preparation device configured to remove heat from the first sorbent portion to increase its sorption capacity, and a sorbent heat exchanger, in particular a bulk solids heat exchanger, for transferring said heat to the desorption device to desorb the second substance from the second sorbent portion. The preparation device may be configured to cool the first sorbent portion down to less than 80°C, preferably less than 10°C, even more preferably less than 0°C, for example substantially equal to -1°C for increasing its sorption capacity. The preparation device may be configured to remove heat from the first sorbent portion after the first substance has been removed from the first sorbent portion. The sorbent heat exchanger may be a heat exchanger configured to exchange heat of the sorbent. A bulk solids heat exchanger may be a heat exchanger configured to work with bulk solids, for example solids provided in the form of loose particles. The sorbent heat exchanger may be configured to remove heat from the preparation device to transmit it to the desorption device to increase the sorption capacity of the sorbent. The sorbent heat exchanger may be configured to perform the steps of removing heat from the first sorbent portion and transferring said heat to the second sorbent portion to desorb the second substance from the second sorbent portion. The desorption device and the preparation device may be configured to move the sorbent through it via gravity, such that the sorbent may fall through them. The sorbent may be slowed down by baffles, conduits, and/or other components when passing through it. The desorption device may be arranged above the preparation device with respect to gravity. The desorption device may be configured such that the sorbent may fall from the desorption device into the preparation device. The sorbent heat exchanger may comprise a heater, particularly an electric heater, configured to add heat to the desorption device.

The sorbent heat exchanger, the desorption device and the preparation device may be configured to have a substantially constant temperature at each point. The desorption device may comprise a temperature profile that increases from the top to the bottom. The desorption device may be configured to heat the sorbent up accordingly as it passes through it. Through this arrangement, the sorbent may be heated up while maintaining the desorption device temperature substantially constant. The preparation device may analogously comprise a temperature profile that decreases from the top to the bottom. The preparation device may be configured to cool the sorbent down accordingly as it passes through the preparation device while maintaining a substantially constant temperature. By providing the sorbent transport system with a preparation device and a heat exchanger as described, an efficiency of the apparatus may be increased further and/or an operating cost reduced further.

In an embodiment, the desorption device comprises a vacuum chamber configured to apply a vacuum to the first sorbent portion to increase its sorption capacity. The vacuum chamber may cause the first substance to desorb from the first sorbent portion by applying a vacuum to it. The vacuum chamber may comprise means for removing the desorbed substance, for example a pump, fluid outlet, condenser of the desorbed fluid and/or other means. The vacuum chamber may be arranged between the heating chamber of the desorption device and the preparation device. The vacuum chamber may be configured to reduce a pressure down to less than 0.5 bar, preferably less than 0.1 bar, even more preferably less than 0.01 bar. By providing the desorption device with a vacuum chamber as described, the desorption of the substance from the sorbent may be improved even further, as described in relation to the first aspect.

In an embodiment, the desorption device comprises a purging arrangement configured to flow a purge fluid over the first sorbent portion to increase its sorption capacity. The purging chamber may be configured to enable a flow of the purge fluid over the first sorbent portion, such that that substance is desorbed further from the sorbent. The purge fluid may be a fluid with particularly little substance, preferably particularly little carbon dioxide and/or water, as described in relation to the first aspect. The purge fluid may comprise a particularly low partial pressure of the substance, thus causing and/or increasing a desorption when flowed over the first sorbent portion. The purging arrangement may form a part of the vacuum chamber. The purging arrangement may comprise a conduit, preferably comprising a throttle for reducing a pressure of the purge fluid, for introducing the purge fluid to the vacuum chamber. The purging arrangement may comprise a conduit for removing the purge fluid from the vacuum chamber, preferably comprising a pump and/or other means. The purging arrangement may be separate from any vacuum chamber. For example, the purging arrangement may comprise a purging chamber, which may be operated at ambient pressure. By providing the desorption device with a purging arrangement, the desorption of the substance from the sorbent may be improved even further, as described in relation to the first aspect.

In an embodiment, the sorbent transport system comprises a dust extraction system configured to remove dust from the first sorbent portion. The dust extraction system may comprise an arrangement for aspirating the dust away from the first sorbent portion. The dust may comprise particles of sorbent, in particular particles broken off due to thermal stress and/or particles from the air which were not filtered out. The dust extraction system may comprise a sieve, a centrifuge, and/or other arrangements for separating the dust from the first sorbent portion. By providing the apparatus with a dust extraction system, a long-term effectiveness of the apparatus may be ensured, further improving efficiency, cost effectiveness and/or reliability.

In an embodiment, the apparatus comprises a fluid transport system configured to transport the first fluid amount and the second fluid amount through the contacting chamber. The fluid transport system may be configured to transport the fluid such that some fluid persistently contacts the sorbent, the sorbent contacting the fluid being continuously replaced. The fluid transport system may comprise an inlet for taking in fluid and an outlet for expelling fluid. The fluid transport system may be configured to take in air from the environment and expel the air back to the environment after extracting the substance from it. The fluid transport system may comprise an air filter. The fluid transport system may not be a closed loop and may be configured to take in new fluid, in particular air, continuously. The fluid transport system may intersect with the sorbent transport system at the contacting chamber in the contacting area described above. The fluid transport system may be configured to transport the fluid using fans. The fans may be configured to create a slight under-pressure at the outlet relative to the inlet to prevent exiting fluid from reentering the fluid transport system. The under-pressure may correspond to a pressure difference between 10 Pa and 700 Pa, preferably between 10 Pa and 300 Pa and even more preferably between 50 Pa and 200 Pa. By providing the apparatus with a fluid transport system, a continuous supply of fluid to extract the substance from may be provided. This may enable a particularly efficient and/or effective operation of the apparatus.

In an embodiment, the apparatus comprises a fluid heat exchanger configured to exchange heat from the second fluid amount before contacting it with the second sorbent portion with the first fluid amount after contacting it with the first sorbent portion. The fluid heat exchanger may be a rotary heat exchanger. The heat exchanger may be configured to additionally exchange humidity, for example transferring humidity from an incoming airstream to an outgoing airstream. The fluid heat exchanger may be configured to cool the second fluid amount before contacting it with the second sorbent portion. The fluid transport system may also comprise a fluid cooler to additionally cool the second fluid amount before contacting it with the second sorbent portion. By providing the apparatus with the fluid heat exchanger, an efficiency and/or throughput of the apparatus may be improved, as a sorption process may be performed more effectively at a lower temperature.

In a third aspect, the present disclosure relates to a control device configured to control the apparatus according to the second aspect to carry out the process according to the first aspect. The respective advantages and further features can be taken from the description of the first and second aspect, wherein embodiments of the first and second aspect also form embodiments of the third aspect and vice versa.

### Brief description of drawings

Fig. 1 shows a schematic illustration of an apparatus for continuously extracting carbon dioxide and water from air.
Fig. 2 shows a flowchart of a method for continuously extracting carbon dioxide and water from air with the apparatus of Fig. 1.

### Detailed description of embodiments

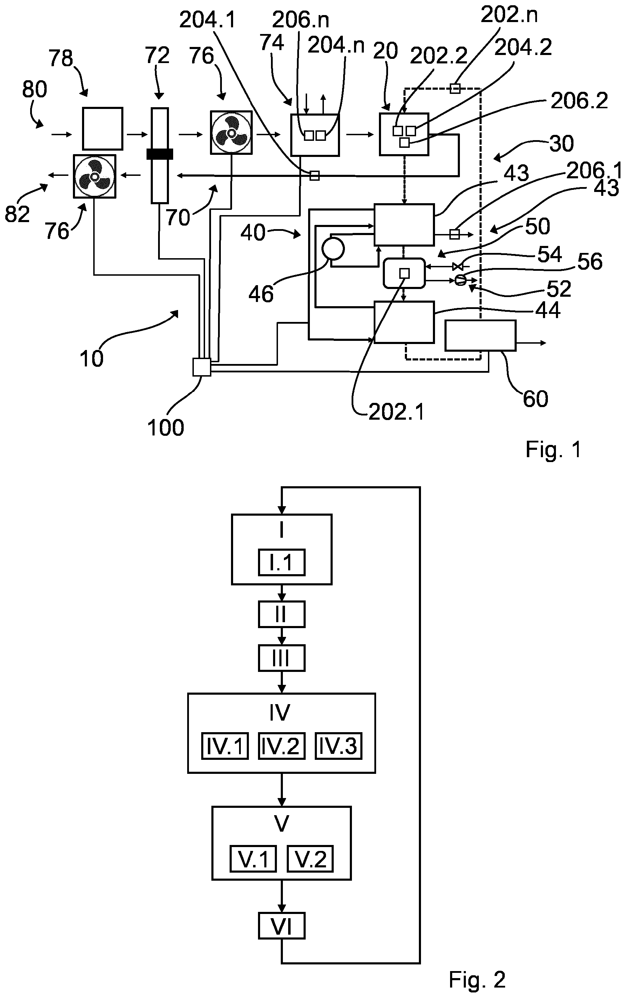

Fig. 1 shows a schematic illustration of an apparatus 10 for continuously extracting a substance from a fluid according to an embodiment of the present invention. In the embodiment illustrated in Fig. 1, the substance is carbon dioxide and water, and the fluid is ambient air. The apparatus 10 comprises a sorbent transport system 30 and a fluid transport system 70. The sorbent is continuously transported in the sorbent transport system 30, which is indicated in Fig. 1 by the arrows. The sorbent is schematically shown here as comprising a series of portions, indicated as first sorbent portion 202.1, second sorbent portion 202.2 and nth sorbent portion 202.n. The designation of the nth sorbent portion 202.n indicates that a plurality of sorbent portions is transported across the sorbent transport system 30 which may exceed the three portions indicated in Fig. 1. Each sorbent portion 202.1, 202.2, 202.n will repeatedly pass through the various sections of the sorbent transport system 30. The sorbent comprises zeolite particles in the embodiment shown here. The zeolite particles have a particle size between 1 mm and 5 mm. The fluid transport system 70 continuously moves ambient air through the system. New ambient air is taken in via the inlet 80 and exhausted back out to the environment via the outlet 82. The air is schematically shown here as comprising a series of fluid amounts, which may be portions of air, indicated as first fluid amount 204.1, second fluid amount 204.2 and nth fluid amount 204.n. The designation of the nth fluid amount 204.n indicates that a plurality of fluid amounts are transported across the fluid transport system 70 which may exceed the three amounts indicated in Fig. 1. As indicated by the arrows in Fig. 1, each air packet only passes through the fluid transport system 70 once, exiting back to the environment after passing through it.

Analogously to the sorbent portions 202.1, 202.2, 202.n and the fluid amounts 204.1, 204.2, 204.n, the substance is indicated by the first substance 206.1, the second substance 206.2 and the nth substance 206.n. The first, second and nth elements of the sorbent, fluid and substance indicate each element at a certain point in time, with the first elements each indicating a first point in time, the second elements indicating a second point in time and the nth elements indicating an nth point in time.

The sorbent transport system 30 and the fluid transport system 70 cross at a contacting chamber 20 forming a contacting area. The contacting chamber 20 is configured to allow the air moving through the fluid transport system 70 to come into contact with the sorbent moving through sorbent transport system 30. As indicated by the arrows in Fig. 1, new air continuously flows through the contacting chamber 20, while the sorbent is continuously replaced. When the sorbent and the air come into contact, carbon dioxide and water get adsorbed by the sorbent and removed from the air. The sorbent exiting the contacting chamber 20 then carries out the carbon dioxide and the water. The air exiting the contacting chamber 20 has a lower carbon dioxide and water content than the air entering the contacting chamber 20. This is indicated by the position of the first substance 206.1, second substance 206.2 and nth substance 206.n. The nth substance 206.n is dissolved within the nth fluid amount 204.n in a fluid cooler 74. Downstream of that in the contacting chamber 20, the second substance 206.2 is in contact with both the second fluid amount 204.2 and the second sorbent portion 202.2, as it is being adsorbed. And further downstream of that, the first substance 206.1 is being removed from a desorption device 42 as it was desorbed from the first sorbent portion 202.1. The first fluid amount 204.1 is transported back to the environment by the fluid transport system 70. By continuously replacing both the sorbent and the air, a continuous extraction process is provided.

The fluid transport system 70 comprises a fluid heat exchanger 72 and the fluid cooler 74. The fluid heat exchanger 72 is configured to exchange heat between an incoming airstream, which enters through the inlet 80, and an outgoing airstream, which exits through the outlet 82. It is configured to move heat and water from the incoming airstream, cooling it and drying it, to the outgoing airstream, warming it back up and reintroducing the water. By cooling down the incoming air, an extraction of carbon dioxide and water in the contacting chamber 20 further downstream is improved. Additionally, by removing water from the incoming airstream, less sorbent is required in the contacting chamber 20, as less water is adsorbed. The fluid heat exchanger 72 is a rotary heat exchanger in the embodiment shown here. In an exemplary case, the incoming airstream has a temperature of 6°C and a relative humidity of 76%, corresponding to 4.3 grams of water per kilogram of air. After passing through the fluid heat exchanger 72, the air has a temperature of 1 °C and a water content of 0.25 grams per kilogram of air. The carbon dioxide concentration in the airstream is unaffected.

The fluid transport system 70 comprises an air filter 78, filtering the air before it enters the fluid heat exchanger 72. The fluid transport system 70 also comprises two fans 76, which are configured to pull the air in and push it out again, and which are arranged behind the fluid heat exchanger 72 in the entering and in the exiting air stream, enabling a continuous circulation of fresh air through the system. The fans 76 are configured to create a slight under-pressure at the outlet 82 relative to the inlet to prevent the exiting air from reentering the fluid transport system 70. The under-pressure may correspond to a pressure difference between 50 Pa and 700 Pa in the embodiment shown here. The fluid transport system 70 further comprises a fluid cooler 74, which is configured to further cool down the entering airstream. In the exemplary case, in which the entering air has a temperature of substantially 1°C after passing through the fluid heat exchanger 72, the air is further cooled down to about -1°C, further improving the absorption process in the contacting chamber 20.

The fluid transport system 70 is configured to pass the airstream into the contracting chamber 20, in which carbon dioxide and the remaining water content is adsorbed by the sorbent. This is indicated by the second sorbent portion 202.2, fluid amount 204.2 and substance 206.2 contacting each other in Fig. 1. After exiting the contacting chamber 20, the exiting air is substantially free from carbon dioxide and water. In the exemplary case described above, the air exiting the contacting chamber 20 has a temperature of around 0°C. As the airstream exits the fluid transport system 70, it is again passed through the fluid heat exchanger 72. As it passes through the fluid heat exchanger 72, the water and heat extracted at the entry is returned to the airstream. The air thus exits the fluid transport system 70 with a temperature of around 5°C and a water content of around 4 grams per kilogram.

The sorbent transport system 30 comprises a sorbent heat exchanger 40, a desorption device 42, a preparation device 44, and a dust extraction system 60. The sorbent transport system 30 is configured to successively move the sorbent through these components, thereby preparing it for re-entering the contacting chamber 20 to extract further carbon dioxide and water. During this, the sorbent is dried, removing the carbon dioxide and water absorbed by it, and cleaned, and thereby prepared to again adsorb more from the air in the contacting chamber 20. This is indicated by the first substance 206.1 being separated from the first sorbent portion 202.1 and expelled from the desorption device 42. The desorption device 42 comprises a heating chamber 43, configured to heat the sorbent, and a vacuum chamber 50, configured to apply a vacuum to the sorbent. The heating chamber 43 and the preparation device 44 are separated by the vacuum chamber 50.

The sorbent heat exchanger 40 is a bulk solids heat exchanger in the embodiment shown here. The sorbent heat exchanger 40 is configured for exchanging heat of bulk solids, such as the zeolite particles making up the sorbent in the embodiment shown here. The bulk solids can slowly pass through the heating chamber 43, the vacuum chamber 50 and the preparation device 44 from top to bottom, being pulled through by gravity. The heat exchanger 40 comprises baffles, not shown, arranged in the heating chamber 43 and the preparation device 44 over which the bulk solid passes. It uses water as a heat exchange medium. The sorbent heat exchanger 40 is configured to exchange a heat between the heating chamber 43 and the preparation device 44, moving a heat from the preparation device 44 to the heating chamber 43. This has the effect of heating up the heating chamber 43 and cooling down the preparation device 44.

The sorbent entering the heating chamber 43 carries water and carbon dioxide adsorbed at its surface. The heating chamber 43 is configured to heat it up, thereby causing the carbon dioxide and water to desorb from it. The heating chamber 43 is configured to carry the desorbed carbon dioxide and water out of the heating chamber 43. This is indicated by the arrow exiting to the right in Fig. 1 and by the first substance 206.1. The carbon dioxide and water may then be further processed, for example separated, using devices not shown here. For example, the water may be condensed, resulting in a separate liquid water stream and a gaseous carbon dioxide stream. In addition to being heated by the heat exchanger 40, the heating chamber 43 is heated by an electric heater 46, which is configured to add further heat. The heat exchanger 40, the heating chamber 43 and the preparation device 44, are configured to have a substantially constant temperature at each point. The heating chamber 43 comprises a temperature profile that increases from the top to the bottom. As the sorbent passes through from top to bottom, it heats up correspondingly. Through this arrangement, the sorbent can be heated up and cooled down, while maintaining the surrounding apparatus 10 at a substantially constant temperature over time. This results in a process with a higher efficiency, as the apparatus 10 itself does not have to be heated up or cooled down. The heating chamber 43 is configured to heat the sorbent up to a temperature of over 150°C in the embodiment shown in Fig. 1.

The sorbent transport system 30 is configured to move the sorbent into the vacuum chamber 50 after it exits the heating chamber 43. The vacuum chamber 50 is configured to apply a vacuum to the sorbent to desorb remaining carbon dioxide and water. The vacuum chamber 50 is configured to apply a vacuum of about 0.01 bar to the sorbent. As the pressure is reduced, carbon dioxide and water desorb from the sorbent. These are carried out from the vacuum chamber 50 and may be processed further as described above.

The vacuum chamber 50 may comprise a purging arrangement 52 configured to flow a purge fluid, provided here by dry air, over the warm sorbent. This may cause the partial pressure of water and additionally or alternatively carbon dioxide in the vacuum chamber 50 to be reduced even further, resulting in more of it being desorbed from the sorbent. The dry air may pass through a throttle 54 before entering the vacuum chamber 50 to reduce its pressure. The outflowing gasses may be pumped out by a pump 56. The purge fluid may additionally or alternatively comprise carbon dioxide in some embodiments.

The sorbent transport system 30 is configured to transport the sorbent to the preparation device 44 after it exits the vacuum chamber 50. The preparation device 44 is configured to cool the sorbent to ready it to adsorb further carbon dioxide and water when entering the contacting chamber 20. Analogously to the heating chamber 43, the preparation device 44 is configured to have a substantially constant temperature at each point over time. The preparation device 44 comprises a temperature profile that decreases from the top to the bottom. As the sorbent passes through, it cools down correspondingly. The heat extracted from the sorbent in the preparation device 44 is transferred to the heating chamber 43 via the sorbent heat exchanger 40. This provides for an efficient recovery of heat, providing for a particularly efficient system.

The sorbent transport system 30 is configured to transport the sorbent to the dust extraction system 60 after it exits the preparation device 44. The dust extraction system 60 is configured to remove a dust from the sorbent, for example through suction. The dust may be expelled from the system, as indicated by the arrow on the right. The sorbent may experience mechanical degradation as it experiences large temperature swings passing through the sorbent transport system 30, with small particles breaking off and creating dust. By regularly removing this dust and particles from the air which were not filtered out before, a high effectiveness of the sorbent may be preserved.

The sorbent transport system 30 is configured to transport the sorbent to the contacting chamber 20 after it exits the dust extraction system 60. The sorbent transport system 30 thereby returns the sorbent to a starting position, providing a closed loop for the sorbent to be circulated in. The sorbent transport system 30 comprises a conveyor belt to transport the sorbent. In some embodiments, it may comprise bucket elevators and/or screw elevators to transport the sorbent.

The apparatus 10 comprises a control device 100 configured to control the apparatus 10. The control device 100 is electronically connected to the sorbent transport system 30, the sorbent heat exchanger 40, the dust extraction system 60, the fluid heat exchanger 72, the fluid cooler 74 and the fans 76, and controls these to perform the process shown in Fig. 2.

Fig. 2 shows a flowchart of a method for continuously extracting carbon dioxide and water from air with the apparatus 10 of Fig. 1. The steps described herein are performed continuously, with a continuous stream of fluid and sorbent passing through the apparatus 10 shown in Fig. 1. Thus, all steps are performed at the same time in different places of the apparatus 10 when it is operating as intended. The sorbent is transported in a loop, bringing it back into contact with the fluid in a cyclical manner.

In a first step of cooling I the second fluid amount 204.2, the second fluid amount 204.2, provided here by air, is passed through the fluid heat exchanger 72 and the fluid cooler 74 to reduce its temperature. For this, the second fluid amount 204.2 is pulled in through an air filter 78 by a fan 76 positioned downstream of the fluid heat exchanger 72. The step of cooling I comprises a step of exchanging I.1 a heat between said second fluid amount 204.2 and the first fluid amount 204.1 after contacting it with the first sorbent portion 202.1. Thus, heat is transferred from the incoming air to the outgoing air, cooling down the incoming air and heating up the outgoing air. In the embodiment shown in Fig. 1, humidity is also transferred from the incoming air to the outgoing air.

In a second step of contacting II the first fluid amount 204.1 with the first sorbent portion 202.1, the air is directed into the contacting chamber 20 via the fluid transport system 70 and the sorbent is transported into the contacting chamber 20 via the sorbent transport system 30. There, in the contacting area of the contacting chamber 20, the first sorbent portion 202.1 adsorbs the first substance 206.1, being carbon dioxide and water, from the first fluid amount 204.1. In a third step of separating III the first sorbent portion 202.1, the first sorbent portion 202.1 is transported out of the contacting chamber 20 further along the sorbent transport system 30. Similarly, the first fluid amount 204.1 is directed out of the contacting chamber 20 and further along the fluid transport system 70. Thus, the first fluid amount 204.1 and the first sorbent portion 202.1 are no longer in contact with each other.

As indicated by the arrow looping back in the flowchart shown in Fig. 2, the steps of the method shown, such as the step of contacting II, are repeated continuously. This is shown schematically in Fig. 1, in which the second fluid amount 204.2 and the second sorbent portion 202.2 are contacted in the contacting chamber 20, causing the second substance 206.2 to be adsorbed by the second sorbent portion 202.2.

In a fourth step, the first substance 206.1 is desorbed IV from the first sorbent portion 202.1. To achieve this, the sorbent is heated IV.1 in the heating chamber 43, causing the first substance 206.1, namely carbon dioxide and water, adsorbed at the first sorbent portion 202.1 to desorb. After being heated IV.1 in the heating chamber 43, the first sorbent portion 202.1 is transferred to the vacuum chamber 50, where a vacuum is applied IV.2, causing further desorption. To cause even more desorption, a purge fluid, in this case dry air, is flowed IV.3 over the first sorbent portion 202.1 in the vacuum chamber 50 via the purging arrangement 52. Thus, a high amount of carbon dioxide and water are desorbed IV from the sorbent.

In a fifth step, the first sorbent portion is prepared V. Preparing V comprises removing heat V.1 from the first sorbent portion 202.1, in other words, reducing its temperature. The sorbent is able to adsorb more carbon dioxide and water when having a lower temperature. As it is cooled down, it therefore gains capacity to adsorb carbon dioxide and water from the incoming air. Preparing V the first sorbent portion 202.1 also comprises a step of transferring V.2 the removed V.1 heat back to the second sorbent portion 202.2 in the heating chamber 43. This is achieved by means of the sorbent heat exchanger 40 and provides a particularly efficient process.

In a sixth step of cleaning VI the first sorbent portion 202.1, it is transferred to the dust extraction system 60, in which the dust that may have formed as the first sorbent portion 202.1 passed through the sorbent transport system 30 is removed. This ensures that the sorbent remains as effective and functional as possible. After cleaning VI, the first sorbent portion 202.1 is returned to the contacting chamber 20, closing the loop and providing a continuous, looped and efficient method for extracting carbon dioxide and water from ambient air.

### Reference signs

- 10: apparatus
- 20: contacting chamber
- 30: sorbent transport system
- 40: sorbent heat exchanger
- 42: desorption device
- 43: heating chamber
- 44: preparation device
- 46: electric heater
- 50: vacuum chamber
- 52: purging arrangement
- 54: throttle
- 56: pump
- 60: dust extraction system
- 70: fluid transport system
- 72: fluid heat exchanger
- 74: fluid cooler
- 76: fan
- 78: air filter
- 100: control device

- 202.1: first sorbent portion
- 202.2: second sorbent portion
- 202.n: nth sorbent portion
- 204.1: first fluid amount
- 204.2: second fluid amount
- 204.n: nth fluid amount
- 206.1: first substance
- 206.2: second substance
- 206. n: nth substance

- I: cooling the second fluid amount
- I.1: exchanging a heat
- II: contacting the first fluid amount
- III: separating the first sorbent portion
- IV: desorbing the first substance
- IV.1: heating the first sorbent portion
- IV.2: applying a vacuum to the first sorbent portion
- IV.3: flowing a purge fluid over the first sorbent portion
- V: preparing the first sorbent portion
- V.1: removing heat from the first sorbent portion
- V.2: transferring heat to the second sorbent portion
- VI: cleaning the first sorbent portion

## Claims

1. A method for continuously extracting a substance, preferably carbon dioxide or water, from a fluid, preferably air, comprising the following steps:
- contacting (II) a first fluid amount (204.1) with a first sorbent portion (202.1) in a contacting area (20), enabling the first sorbent portion (202.1) to sorb a first substance (206.1) from the first fluid amount (204.1);
- separating (III) the first sorbent portion (202.1) from the contacting area (20);
- desorbing (IV) the first substance (206.1) from the first sorbent portion (202.1) separated from the contacting area (20); and
- contacting (II) a second fluid amount (204.2) with a second sorbent portion (202.2) in the contacting area (20) while desorbing (IV) the first substance (206.1) from the first sorbent portion (202.1), enabling the second sorbent portion (202.2) to sorb a second substance (206.2) from the second fluid amount (204.2).

2. The method according to claim 1, wherein desorbing (IV) the first substance (206.1) from the first sorbent portion (202.1) comprises at least one of heating (IV.1) the first sorbent portion (202.1), applying (IV.2) a vacuum to the first sorbent portion (202.1), and flowing (IV.3) a purge fluid over the first sorbent portion (202.1).

3. The method according to claim 1 or 2, further comprising a step of returning (VII) the first sorbent portion (202.1) separated from the contacting area (20) to the contacting area (20).

4. The method according to one of the preceding claims, further comprising a step of preparing (V) the first sorbent portion (202.1) to increase its sorption capacity.

5. The method according to claim 4, wherein preparing (V) the first sorbent portion (202.1) comprises removing (V.1) heat from the first sorbent portion (202.1) and transferring (V.2) said heat at least partially to the second sorbent portion (202.2) to desorb (IV) the second substance (206.2) from the second sorbent portion (202.2).

6. The method according to one of the previous claims, further comprising a step of cooling (I) the second fluid amount (204.2) before contacting (II) it with the second sorbent portion (202.2), wherein cooling (I) the second fluid amount (204.2) optionally comprises exchanging (1.1) heat between said second fluid amount (204.2) and the first fluid amount (204.1) after contacting (II) it with the first sorbent portion (202.1).

7. The method according to one of the previous claims, further comprising a step of cleaning (VI) the first sorbent portion (202.1), in particular by removing a dust from the first sorbent portion (202.1).

8. An apparatus (10) for continuously extracting a substance, preferably carbon dioxide or water, from a fluid, preferably air, the apparatus (10) optionally being configured to carry out a method according to one of the preceding claims, comprising
a contacting chamber (20) for accommodating the fluid,
a sorbent transport system (30) for transporting a first sorbent portion (202.1) through the contacting chamber (20) such that a first fluid amount (204.1) is contacted with the first sorbent portion (202.1), enabling the first sorbent portion (202.1) to sorb a first substance (206.1) from the first fluid amount (204.1), and
a desorption device (42) configured to desorb the first substance (206.1) from the first sorbent portion (202.1),
wherein the sorbent transport system (30) is configured to transport a second sorbent portion (202.2) through the contacting chamber (20) while the first substance (206.1) is being desorbed from the first sorbent portion (202.1) by the desorption device (42) such that a second fluid amount (204.2) is contacted with the second sorbent portion (202.2), enabling the second sorbent portion (202.2) to sorb a second substance (206.2) from the second fluid amount (204.2).

9. The apparatus (10) according to claim 8, wherein the sorbent transport system (30) is configured to return the first sorbent portion (202.1) to the contacting chamber (20) after being transported through the contacting chamber (20).

10. The apparatus (10) according to claim 8 or 9, comprising a preparation device (44) configured to remove heat from the first sorbent portion (202.1) to increase its sorption capacity, and a sorbent heat exchanger (40), in particular a bulk solids heat exchanger (40), for transferring said heat to the desorption device (42) to desorb the second substance (206.2) from the second sorbent portion (202.2).

11. The apparatus (10) according to one of claims 8 to 10, wherein the desorption device (42) comprises a vacuum chamber (50) configured to apply a vacuum to the first sorbent portion (202.1) to increase its sorption capacity.

12. The apparatus (10) according to one of claims 8 to 11, wherein the desorption device (42) comprises a purging arrangement (52) configured to flow a purge fluid over the first sorbent portion (202.1) to increase its sorption capacity.

13. The apparatus (10) according to one of claims 8 to 12, comprising a dust extraction system (60) configured to remove dust from the first sorbent portion (202.1).

14. The apparatus (10) according to one of claims 8 to 13, comprising a fluid transport system (70) configured to transport the first fluid amount (204.1) and the second fluid amount (204.2) through the contacting chamber (20).

15. The apparatus (10) according to claim 14, comprising a fluid heat exchanger (72) configured to exchange heat from the second fluid amount (204.2) before contacting it with the second sorbent portion (202.2) with the first fluid amount (204.1) after contacting it with the first sorbent portion (202.1).
